# EUROPEAN PATENT APPLICATION

(11) **EP 4 307 813 A1**
(43) Date of publication of application: **17.01.2024**
(21) Application number: 22184418.6
(22) Date of filing: 12.07.2022
(51) Int. Cl.: H04W 72/12, H04W 72/04, H04W 88/06

(54) **VEHICLE, APPARATUS, COMPUTER PROGRAM AND METHODS FOR MITIGATION OF INTERFERENCE ON A UWB APPLICATION**

(71) Applicant: Bayerische Motoren Werke Aktiengesellschaft, 80809 München (DE)
(72) Inventor: Kuelzer, Daniel, 80799 München (DE); Mourad, Alaa, 80995 München (DE)

(57) **Abstract**

Embodiments of the present disclosure relate to a vehicle, an apparatus, a computer program, and methods for mitigation of interference on a UWB application. In particular, the present disclosure relates to a method (100) for mitigation of interference on a UWB application of a vehicle (350) by a radio transmitter (320) of the vehicle (350). The method (100) comprises obtaining (110) information on the UWB application and adjusting (120) the radio transmitter (320) based on the information on the UWB application such that the interference with the UWB application is at least reduced.

## Description

Embodiments of the present disclosure relate to a vehicle, an apparatus, a computer program, and methods for mitigation of interference on a UWB application. In particular, but not exclusively, embodiments relate to a concept for mitigation of interference on a UWB application in vehicles.

In vehicles, communication plays an increasingly important role. For this, vehicles may use several communication technologies. Hence, vehicles may be equipped with various communication technologies, e.g., WLAN (wireless local area network) technology, Bluetooth Low Energy (BLE), and ultra-wideband (UWB). In particular, vehicles may use WLAN technology according to the Wi-Fi 6E (6 GHz) standard by the Institute of Electrical and Electronics Engineers (IEEE) which is designed to operate in license-exempt bands between 1 and 7.125 GHz, including the 2.4 and 5 GHz bands as well as the much wider 6 GHz band. However, the use of Wi-Fi 6E causes (in-band) interference with UWB communication of the vehicle. Interference may cause data loss and/or malfunctions. In practice, interference, e.g., may cause that functions using UWB, e.g., locking/unlocking the vehicle by a smartphone and/or presence detection, may not work properly or not at all.

In some applications of WLAN technology, it is provided that a WLAN router applies "listen before talk" (LBT) techniques, i.e., that the WLAN router checks whether a WLAN channel to be used is interference-free, before using the WLAN channel. However, the transmission power of UWB communication is lower than WLAN signals and the sensitivity of WLAN devices too low to detect UWB communication when applying LBT. Accordingly, UWB communication is not detected by WLAN devices using LBT. So, LBT by WLAN devices does not help to mitigate interference on UWB applications.

Hence, there may be a demand for an improved concept for mitigation of interference on UWB applications.

This demand may be satisfied by the subject-matter of the appended independent and dependent claims.

Embodiments are based on the finding that a timing of UWB applications, e.g., transmission and/or reception times of UWB communication sessions, may be predefined. One basic idea of embodiments according to the present disclosure is to use knowledge about the transmission and/or reception times for mitigation of interference on the UWB application by a radio transmitter (not involved in the UWB application). The concept disclosed herein, e.g., proposes to adapt a timing of the radio transmitter such that one or more transmissions of the radio transmitter, in terms of time, overlap less with transmission and/or reception times for the UWB application. According to another aspect of the present disclosure, mitigation measures provide for adjusting a transmission channel of the radio transmitter such that transmissions of the radio transmitter, in terms of time, overlap less with a UWB channel for the UWB application in favor of less interference. One idea, e.g., is to reduce the transmission channel to such an extent (e.g., to a bandwidth of at most 20 MHz) such that transmissions of the radio transmitter can be filtered out.

Embodiments of the present disclosure provide a method for mitigation of interference on a UWB application of a vehicle by a radio transmitter of the vehicle. The method comprises obtaining information on the UWB application. Also, the method comprises adjusting the radio transmitter based on the information on the UWB application such that the interference with the UWB application is at least reduced. In this way, data/information loss, malfunctions, and/or failures of the UWB application may be reduced.

In practice, adjusting the radio transmitter may comprise generating a message indicative of the information on the UWB application and transmitting the message to the radio transmitter for adjusting the radio transmitter. In this way, the method may be applied by any device other than the radio transmitter. In embodiments, the method, e.g., may be applied/executed by a UWB device which may be also used for the UWB application.

In some embodiments, the information on the UWB application comprises information on at least one time slot for the UWB application, and adjusting the radio transmitter comprises adjusting, based on the information on the time slot, a transmission time of the radio transmitter such that the interference is at least reduced. This, e.g., provides that transmissions of the radio transmitter overlap less or not at all with transmissions and/or receptions for the UWB application. In this way, the interference on the UWB application may be further reduced or ideally avoided.

Alternatively or additionally, adjusting the transmitter comprises adjusting a transmission channel of the radio transmitter based on the information on the UWB application. In this way, an overlap of transmissions of the radio transmitter and transmissions and/or receptions for the UWB application in terms of a used frequency may be reduced, e.g., such that a bandwidth of the transmissions of the radio transmitter is adapted such that the transmissions interfere less with the UWB application.

In particular, adjusting the transmission channel may comprise switching the transmission channel. In practice, multiple distinct transmission channels are available for transmissions of the radio transmitter. Through switching the transmission channel, the overlap with a UWB channel for the UWB application may be at least reduced or ideally avoided such that the interference with the UWB application is reduced or even avoided.

Alternatively or additionally, adjusting the transmission channel comprises reducing a bandwidth of the transmission channel based on the information on the UWB application. In this way, switching the transmission channel can be omitted or the interference may be further reduced.

In some embodiments, reducing the bandwidth comprises reducing the bandwidth to at most 20 MHz. In some applications, interfering radio signals with a bandwidth of at most 20 MHz may be filtered out by UWB devices. Accordingly, reducing the bandwidth to at most 20 MHz may allow to filter out transmissions of the radio transmitter. In this way, switching the transmission channel can be omitted., e.g., in order to use a certain preferred transmission channel.

Accordingly, the method may further comprise filtering out the interference within the reduced bandwidth for the UWB application.

Further embodiments provide a method for a radio transmitter of a vehicle and for mitigation of interference on a UWB application of a vehicle by the radio transmitter of the vehicle. The method comprises receiving a message indicative of information on the UWB application and adjusting the radio transmitter based on the information on the UWB application to at least reduce the interference. Adjusting the radio transmitter, e.g., can be done as described above or below in more detail. In this way, the interference on the UWB application may be reduced such that malfunctions and/or failures are reduced or ideally avoided.

In some embodiments, the radio transmitter comprises a wireless local area network, WLAN, device.

Other embodiments provide a computer program having a program code for performing at least one of the methods of the preceding claims, when the computer program is executed on a computer, a processor, or a programmable hardware component.

Further embodiments provide an apparatus comprising one or more interfaces for communication and a data processing circuit configured to control the one or more interfaces and execute, using the one or more interfaces, one of the methods proposed herein.

Other embodiments provide a vehicle comprising the apparatus proposed herein.

Some examples of apparatuses, methods and/or computer programs will be described in the following by way of example only, and with reference to the accompanying figures, in which
Fig. 1 shows a flow chart schematically illustrating an embodiment of a method for mitigation of interference on a UWB application of a vehicle by a radio transmitter of the vehicle;
Fig. 2 shows a flow chart schematically illustrating an embodiment of a method for a radio transmitter of a vehicle and for mitigation of interference on a UWB application of a vehicle by the radio transmitter of the vehicle;
Fig. 3 schematically illustrates a use case of the proposed concept; and
Fig. 4 shows a block diagram schematically illustrating an embodiment of an apparatus according to the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Vehicles may be equipped with different technologies for communication and other functions. For example, according to a standard of the Car Connectivity Consortium (CCC-TS-101, Version 1.0/1.1) vehicles may be equipped with BLE as well as UWB for digital vehicle access, i.e., accessing vehicles using a personal communications device (e.g., mobile phone, tablet, smartwatch, personal computer, and/or the like). As well, vehicles may be equipped with WLAN technology. However, WLAN technology operating according to the Wi-Fi 6E (6 GHz) standard by IEEE may interfere with UWB applications, e.g., for ranging, presence detection and/or digital vehicle access. In particular, Wi-Fi 6E may, in practice, interfere with UWB channel 5 having center frequency 6 489.6 MHz and 499.2 MHz bandwidth. Hence, UWB applications of a vehicle, such as UWB ranging, may be interfered by WLAN signals from a wireless access point or router aboard the (same) vehicle or other vehicles.

In communication via WLAN, LBT is applied for interference mitigation. However, WLAN devices are not sensitive enough and the transmission power of UWB signals too weak for this in order to mitigate interference of WLAN signals with UWB applications.

Hence, there may be a demand for an improved concept of mitigation of interference of UWB applications by a radio signal. This demand may be at least partly satisfied by the subject-matter of the appended independent and dependent claims. The claimed subject-matter should be described in more detail below with reference to the appended drawings.

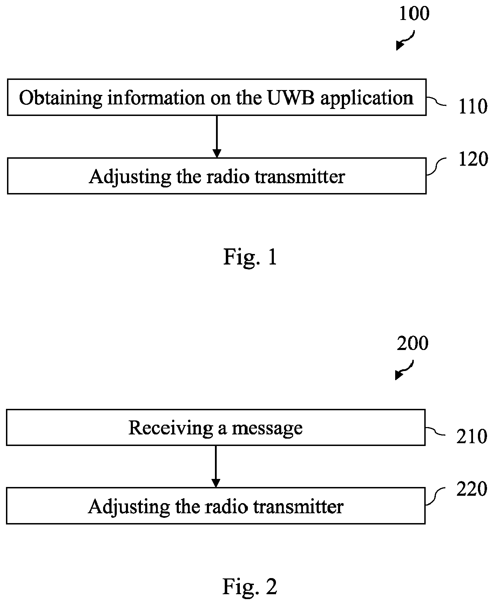

Fig. 1 shows a flow chart schematically illustrating an embodiment of a method 100 for mitigation of interference on a UWB application of a vehicle by a radio transmitter of the vehicle. The radio transmitter, e.g., is a WLAN device.

In context of the present disclosure, UWB can be understood as technology for transmitting information across a wide bandwidth (greater than 500 MHz) or as antenna transmission for which emitted signal bandwidth exceeds the lesser of 500 MHz or 20% of the arithmetic center frequency (definition of the Federal Communications Commission and the International Telecommunication Union). The UWB application can be any function, service, or other application using UWB. In practice, method 100 may be applied in vehicles and the UWB application may comprise a UWB communication session between a vehicle and a user device, as laid out in more detail later. In other applications, the UWB application may comprise UWB radar.

As can be seen from the flow chart, method 100 comprises obtaining information on the UWB application. For this, a device executing or controlling the UWB application may provide the information on the UWB application. The information on the UWB application, e.g., comprises information on a UWB channel and/or a time slot used for the UWB application. The time slot, e.g., is a time window in which a UWB transmitter, receiver, and/or transceiver transmits or receives, respectively, a UWB signal for carrying out the UWB application. The UWB channel can be understood as a frequency band used for the UWB application.

Interference results, for example, from superimposition of UWB signals for the UWB application with other signals from the radio transmitter with similar frequency. In practice, interference occurs, e.g., Wi-Fi 6E signals of the radio transmitter (WLAN device) interferes with UWB signals in UWB channel 5, as mentioned above. The interference may cause failures of the UWB application. In practice, e.g., the UWB ranging is inaccurate or fails.

Method 100, therefore, provides for adjusting 120 the radio transmitter based on the information on the UWB application such that the interference with the UWB application is at least reduced. Adjusting 120 the radio transmitter, e.g., comprises adjusting a transmission of the radio transmitter in terms of timing and a transmission channel of the transmission.

In practice, e.g., a transmission time of the radio transmitter is adjusted based on the information on a timing of the UWB application such that the interference is reduced. In some applications, the information on the UWB application, e.g., comprises information on a time slot for the UWB application. The information on the time slot, e.g., indicates times of one or more time slots. In practice, the information, e.g., comprises information on a start, an end, and/or a duration of an upcoming/next time slot and/or breaks between subsequent time slots. Also, the information on the time slot may comprise or correspond to a schedule indicative of a timing of one or more time slots. The transmission time can be a time period, a start time, or an end time of a transmission of the radio transmitter. By adjusting the transmission time, e.g., an overlap in terms of time with UWB signals map be at least reduced or ideally avoided. In embodiments, the transmission time of one or more transmissions/signals, e.g., is adapted such that the radio transmitter does not transmit any signals during the time slot. In doing so, e.g., one or more transmissions of the radio transmitter may be rescheduled or skipped/omitted such that the overlap and, thus, the interference is reduced. To this end, (clocks of) the UWB device and the radio transmitter may be (at least approximately) synchronized such that the adjustment of the transmission time and the information on the time slot for the UWB application are based on a (approximately) similar time reference. In practice, for time slots of approximately 24 ms for UWB ranging, a synchronization accuracy of 1 to 2 ms may be sufficient for an adequate reduction of interference. The skilled person will appreciate that the proposed concept may be also applied to multiple time slots for the UWB application.

Alternatively or additionally, a transmission channel (i.e., a frequency band for transmissions of the radio transmitter) of the radio transmitter is adjusted based on the information on the UWB application. The information on the UWB application, e.g., indicates which UWB channel is used for the UWB application and the transmission channel is adapted such that an overlap with the used UWB channel is reduced. In this way, the interference may be further reduced. The skilled person will also appreciate that, in this way, the interference may be reduced to such an extent that further adjustments, e.g., timing adjustments (see above) can be dispensed with.

In some embodiments, adjusting the transmission channel comprises switching the transmission channel. In practice, e.g., multiple distinct transmission channels are available for the radio transmitter. In embodiments, the radio transmitter, e.g., is a WLAN device and multiple WLAN channels with different central frequencies and bandwidths are available. So, for switching the transmission channel, e.g., the WLAN channel is changed. The WLAN channels, in practice, may belong to different WLAN bands, e.g., the 2.4 GHz band, the 5 GHz band, and the 6 GHz band. Accordingly, switching the transmission channel (WLAN channel) may also comprise switching a transmission band (WLAN band). In doing so, a transmission channel having a smaller or no overlap with a bandwidth of UWB signals for the UWB applications may be selected/used and, thus, the interference with the UWB application may be reduced. In embodiments, e.g., UWB channel 5 is used for the UWB application and the radio transmitter operates in a WLAN channel in the 6 GHz band according to Wi-Fi 6E. Due to the overlap of UWB channel 5 and the 6 GHz band, interference may occur. Hence, according to the proposed concept, the radio transmitter may switch to another WLAN channel, e.g., one in the 5 GHz or 2.4 GHz band such that the interference with UWB signals is reduced or avoided. The skilled person having benefit from the present disclosure will appreciate that the concept may be also applied to other UWB channels and/or transmission channels of the radio transmitter.

Alternatively or additionally, adjusting the transmission channel comprises reducing a bandwidth of the transmission channel based on the information on the UWB application. In this way, the bandwidth, e.g., can be reduced such that the transmission channel overlaps less or no longer with the UWB channel for the UWB application in favor of less interference. In this way, switching the transmission channel may be omitted, e.g., in order to maintain a preferred transmission channel.

Also, the bandwidth can be reduced to such an extent that transmissions of the radio transmitter within the transmission channel can be filtered out or that the interference with the UWB application is acceptable (e.g., if the UWB application still serves a desired purpose). In UWB applications, e.g., interfering signals with bandwidths up to 20 MHz can be filtered out. Accordingly, the bandwidth, e.g., is reduced to at most 20 MHz such that transmissions of the radio transmitter can be filtered out and, thus, the interference is reduced. Reducing the bandwidth, in particular, allows to maintain a preferred transmission channel.

The skilled person having benefit from the present disclosure will appreciate that the proposed concept may be implemented in different entities or devices. In some applications, the radio transmitter, e.g., is controlled and adjusted externally, i.e., by a device separate from the radio transmitter. The radio transmitter, e.g., is adjusted by the UWB device for the UWB application or any other control device. In other applications, the radio transmitter is configured to adjust itself based on the information on the UWB application. In this case, the UWB device may provide the information on the UWB application to the radio transmitter and the radio transmitter may adjust itself based on the information on the UWB application.

Accordingly, adjusting 120 the radio transmitter may comprise generating a message indicative of the information on the UWB application and transmitting the message to the radio transmitter for adjusting the radio transmitter. In other applications, the UWB device may provide an instruction to the radio transmitter and the radio transmitter is adjusted according to the instruction.

Accordingly, the proposed concept may be also implemented in a complementary interrelated method for a radio transmitter of a vehicle, as laid out in more detail below with reference to Fig. 2.

Fig. 2 shows a flow chart schematically illustrating an embodiment of a method 200 for a radio transmitter of a vehicle and for mitigation of interference on a UWB application of a vehicle by the radio transmitter of the vehicle.

Method 200 accordingly comprises receiving 210 a message indicative of information on the UWB application and adjusting 220 the radio transmitter based on the information on the UWB application to at least reduce the interference.

The radio transmitter, in some embodiments a WLAN device, e.g., receives the message from a UWB device for the UWB application. In practice, the UWB device, e.g., thereby provides the radio transmitter with information indicative of a timing and/or frequency bands (UWB channels) applied for the UWB application. As mentioned above, the information on the UWB application, e.g., comprises information on one or more time slots and/or a UWB channel used for the UWB application and a timing and/or a transmission channel is adapted such that the interference with the UWB application is at least reduced, as mentioned above.

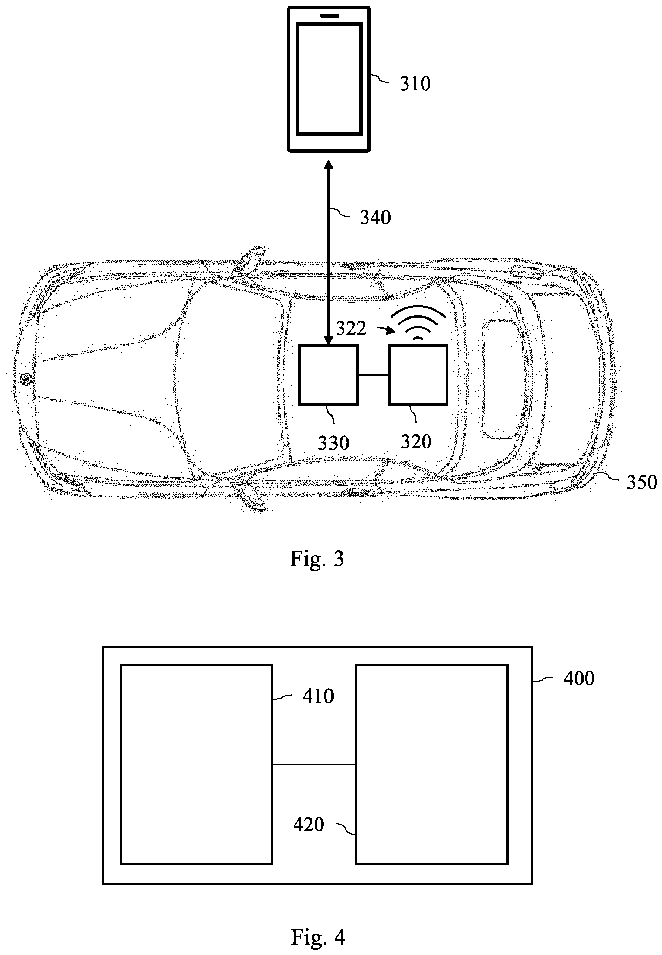

The proposed concept should be explained in more detail with reference to the exemplary use case schematically illustrated in Fig. 3.

As indicated by Fig. 3, the exemplary use case relates to a UWB application of a vehicle 350. In the shown use case, the UWB application provides for communication between a UWB device 330 of the vehicle 350 and a user device 310 in a UWB communication session (indicated by double arrow 340). Apart from UWB device 330, vehicle 350 is also equipped with a radio transmitter 320. In the shown example, the radio transmitter 320 corresponds to a WLAN device. In other applications, the radio transmitter 320 can be also another UWB transmitter. As indicated in Fig. 3, the WLAN device 320 is configured to emit WLAN signals 322. However, WLAN signals may interfere with the UWB communication between the vehicle 350 and the user device 310. The UWB communication session 340, e.g., serves for ranging, i.e., determining a distance and/or position of the user device 310 relative to the vehicle 350. In other examples, the proposed concept is applied for other UWB applications, e.g., UWB radar or the like.

The UWB communication session 340 may comprise a uni- or bidirectional exchange of one or more signals between the user device 310 and the UWB device 330, respectively. In the shown example, the UWB communication session 340, e.g., serves for exchanging time-based signals for time-of-flight-based ranging and/or communicating a digital key. Interference with WLAN signals, e.g., results in less accurate ranging results and/or failures.

For time-of-flight-based ranging, in practice, the UWB device 330 and the user device 310 may be at least approximately (tolerance of 1 to 2 ms) synchronized for a similar time reference for the information on the timing of the UWB application and adjustments of the transmission time.

According to the proposed concept, the WLAN device 320 is adjusted such that the interference with the UWB communication session 340 is at least reduced. To this end, the UWB device 330 transmits a message including information on the UWB application to the WLAN device. In this way, the UWB device 330, e.g., provides the WLAN device 320 with information on a UWB channel and/or one or more time slots in which the UWB device 330 exchanges signals with the user device 310 for said UWB application. In practice, the UWB device 330 may communicate the information on the UWB application via "Out-of-band" communication, i.e., communication outside a shared frequency band (UWB channel, transmission channel). In practice, the UWB device 330, e.g., communicates the information on the UWB application via Bluetooth or a wired connection, e.g., via a bus system of the vehicle 350. In other embodiments, also "In-band" communication may be used, thereby using a shared frequency band. In some embodiments, the same way of communication used for sending the information on the UWB application or the message may be used for time synchronization of the UWB device 330 and the WLAN device 320.

Optionally, the message includes an instruction which is configured to block/prevent the WLAN device 320 from transmitting any signals during the time slots and/or in the UWB channel according to the information on the UWB application. The message, hence, may be referred to as "block message".

The WLAN device 320, then, is adjusted based on the message. In doing so, the WLAN device 320, e.g., is adjusted such that it does not transmit signals in the time slots and/or in the UWB channel indicated by the message. For this, the WLAN device 320 either uses the information on the UWB application or acts according to the instruction of the message, respectively. In practice, the WLAN device 320 may omit, skip, and/or reschedule planned transmissions and/or change the transmission channel, as explained in more detail above. In this way, interference of WLAN signals 322 with the UWB communication session 340 may be reduced and/or WLAN signals 322 with reduced bandwidth can be filtered out such that data/information loss is reduced or avoided and that the ranging is successful.

In applications, e.g., preferably UWB channel 5 and time slots with a predefined length (e.g., of 24 ms) and a predefined break between subsequent time slots may be used for ranging and digital vehicle access. Accordingly, the WLAN device 320 may use or switch to a WLAN channel which does not or less overlap with UWB channel 5 and/or may be adjusted such that the WLAN device 320 emits WLAN signals 322 in breaks between subsequent time slots for the UWB application in order to reduce interference with the UWB application. For coordination, the UWB device 330 may be also synchronized with the WLAN device 320.

The skilled person having benefit from the present disclosure will appreciate that the proposed concept can be also applied to an arbitrary number of (synchronized) radio transmitter, e.g., WLAN devices, and/or to an arbitrary number of UWB devices. As well, the proposed concept can be applied to any UWB applications. In particular, the proposed concept may be also applied to any applications not related to vehicles.

It should be also noted that the proposed concept can be applied for any radio transmitter that might interfere with the UWB application. In practice, this may be another UWB device or a system comprising a combination of a UWB device and a WLAN device.

The proposed concept may be also implemented in a computer program (product) having a program code for performing at least one of the methods of the preceding claims, when the computer program is executed on a computer, a processor, or a programmable hardware component. In practice, the proposed concept may be also implemented in separate interrelated computer programs, e.g., separate computer programs for the UWB device 330 and the WLAN device 320.

As the skilled person will understand, the proposed concept can be also implemented in a respective apparatus, as stated in more detail below with reference to Fig. 4.

Fig. 4 shows a block diagram schematically illustrating an embodiment of an apparatus 400 implementing the proposed concept.

As can be seen from Fig. 4, apparatus 400 comprises one or more interfaces 410 for communication and a data processing circuit 420 configured to control the one or more interfaces 410. The data processing circuit 420 is further configured to control the one or more interfaces 410 and execute, using the one or more interfaces 410, an embodiment of method 100 or 200.

In embodiments the one or more interfaces 410 may comprise means for communication with vehicles or another server. For this, the one or more interfaces 410 may comprise or correspond to any means for obtaining, receiving, transmitting, or providing analog or digital signals or information, e.g., any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 410 may comprise further components to enable according communication, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, and/or the like. The one or more interfaces 410 may be coupled to one or more antennas, which may correspond to any transmit and/or receive antennas, such as horn antennas, dipole antennas, patch antennas, sector antennas, and/or the liked. The antennas may be arranged in a defined geometrical setting, such as a uniform array, a linear array, a circular array, a triangular array, a uniform field antenna, a field array, combinations thereof, and/or the like.

As shown in Fig. 4, the one or more interfaces 410 are coupled to the data processing circuit 420. In embodiments the data processing circuit 420 may comprise any means for processing information according to the proposed method. The data processing circuit 420 may be implemented using one or more processing units, one or more processing devices, any means for processing, such as a processor, a computer or a programmable hardware component being operable with accordingly adapted software. In other words, the described functions of the data processing circuit 420 may as well be implemented in software, which is then executed on one or more programmable hardware components. Such hardware components may comprise a general-purpose processor, a Digital Signal Processor (DSP), a micro-controller, and/or the like.

A person of skill in the art would readily recognize that steps of various above-described methods can be performed by programmed computers. In some embodiments, the apparatus may also comprise program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of those.

In practice, the apparatus may be implemented in a vehicle and/or a radio transmitter of the vehicle.

### References

- 100: method
- 110: obtaining information on the UWB application
- 120: adjusting the radio transmitter
- 200: method
- 210: receiving a message
- 220: adjusting the radio transmitter
- 310: user device
- 320: radio transmitter/WLAN device
- 322: WLAN signals
- 330: UWB device
- 340: UWB communication session
- 400: apparatus
- 410: one or more interfaces
- 420: data processing circuit

## Claims

1. A method (100) for mitigation of interference on a UWB application of a vehicle (350) by a radio transmitter (320) of the vehicle (350), the method (100) comprising:
obtaining (110) information on the UWB application; and
adjusting (120) the radio transmitter (320) based on the information on the UWB application such that the interference with the UWB application is at least reduced.

2. The method (100) of claim 1, wherein adjusting (120) the radio transmitter (320) comprises:
generating a message indicative of the information on the UWB application; and
transmitting the message to the radio transmitter (320) for adjusting the radio transmitter (320).

3. The method (100) of claim 1 or 2, wherein the information on the UWB application comprises information on at least one time slot for the UWB application, and wherein adjusting (120) the radio transmitter (320) comprises adjusting, based on the information on the time slot, a transmission time of the radio transmitter (320) such that the interference is at least reduced.

4. The method (100) of any one of the preceding claims, wherein adjusting (120) the transmitter comprises adjusting a transmission channel of the radio transmitter (320) based on the information on the UWB application.

5. The method (100) of claim 4, wherein adjusting the transmission channel comprises switching the transmission channel.

6. The method (100) of claim 4 or 5, wherein adjusting the transmission channel comprises reducing a bandwidth of the transmission channel based on the information on the UWB application.

7. The method (100) of claim 6, wherein reducing the bandwidth comprises reducing the bandwidth to at most 20 MHz.

8. The method (100) of claim 7, wherein the method (100) further comprises filtering out the interference within the reduced bandwidth for the UWB application.

9. A method (200) for a radio transmitter (320) of a vehicle (350) and for mitigation of interference on a UWB application of a vehicle (350) by the radio transmitter (320) of the vehicle (350), the method comprising:
receiving (210) a message indicative of information on the UWB application; and
adjusting (220) the radio transmitter (320) based on the information on the UWB application to at least reduce the interference.

10. The method (200) of claim 9, wherein the radio transmitter (320) comprises a wireless local area network, WLAN, device.

11. A computer program having a program code for performing at least one of the methods (100, 200) of the preceding claims, when the computer program is executed on a computer, a processor, or a programmable hardware component.

12. An apparatus (400) comprising:
one or more interfaces (410) for communication; and
a data processing circuit (420) configured to:
control the one or more interfaces (410); and
execute, using the one or more interfaces (410), one of the methods (100, 200) of the claims 1 to 10.

13. A vehicle (350) comprising the apparatus (400) of claim 12.
